(19) Europäisches Patentamt
European Patent Office
Office européen des brevets

(11) **EP 4 365 144 A1**

(12) **EUROPEAN PATENT APPLICATION**
published in accordance with Art. 153(4) EPC

(43) Date of publication:
**08.05.2024 Bulletin 2024/19**

(21) Application number: **22833152.6**

(22) Date of filing: **28.06.2022**

(51) International Patent Classification (IPC):
**C03C 3/068** (2006.01)      **C03C 3/062** (2006.01)
**C03C 3/12** (2006.01)       **C03C 3/155** (2006.01)
**G02B 1/00** (2006.01)

(52) Cooperative Patent Classification (CPC):
**C03C 3/062; C03C 3/068; C03C 3/12; C03C 3/155;
G02B 1/00**

(86) International application number:
**PCT/JP2022/025717**

(87) International publication number:
**WO 2023/277005 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 JP 2021107778**

(71) Applicant: **NIKON CORPORATION
Minato-ku
Tokyo 108-6290 (JP)**

(72) Inventors:
• **TAKASU, Shuhei**
  **Tokyo 108-6290 (JP)**
• **YOSHIMOTO, Kohei**
  **Tokyo 108-6290 (JP)**

(74) Representative: **Viering, Jentschura & Partner
mbB
Patent- und Rechtsanwälte
Grillparzerstraße 14
81675 München (DE)**

(54) **OPTICAL GLASS, OPTICAL ELEMENT, OPTICAL SYSTEM, CEMENTED LENS, INTERCHANGEABLE LENS FOR CAMERAS, OBJECTIVE LENS FOR MICROSCOPES, AND OPTICAL DEVICE**

(57) An optical glass comprising: by cation %, more than 0% and up to 40% of a content rate of $La^{3+}$; 15% to 65% of a content rate of $Ti^{4+}$; and more than 0% and up to 20% of a content rate of $Zr^{4+}$; wherein a refractive index ($n_d$) with respect to a d-line is from 2.00 to 2.35.

Fig. 1

**Description**

Technical Field

The present invention relates to an optical glass, an optical element, an optical system, a cemented lens, an interchangeable camera lens, a microscope objective lens, and an optical device. The present invention claims priority to Japanese Patent Application No. 2021-107778, filed on June 29, 2021, the contents of which are incorporated by reference herein in its entirety in designated states where the incorporation of documents by reference is approved.

Background Art

An optical glass is used in various optical elements and optical devices, and, for example, Patent Literature 1 discloses a halide glass used from an ultraviolet region to an infrared region. In order to increase a degree of flexibility in design of an optical system used in an optical device, development of an optical glass having a high refractive index has been required.

Citation List

Patent Literature

PTL 1: JP 07-081973 A

Summary of Invention

A first aspect according to the present invention is an optical glass comprising: by cation %, more than 0% and up to 40% of a content rate of $La^{3+}$; 15% to 65% of a content rate of $Ti^{4+}$; more than 0% and up to 20% of a content rate of $Zr^{4+}$, wherein a refractive index ($n_d$) with respect to a d-line is from 2.00 to 2.35.

And an optical glass comprising: by cation %, more than 0% and up to 40% of a content rate of $La^{3+}$; 15% to 65% of a content rate of $Ti^{4+}$; more than 0% and up to 20% of a content rate of $Zr^{4+}$, 0% to 20% of a content rate of $Si^{4+}$, and 40% to 80% of a total content rate of $Ti^{4+}$, $Zr^{4+}$ and $Si^{4+}$ ($Ti^{4+} + Zr^{4+} Si^{4+}$).

And an optical glass comprising: by cation %, more than 0% and up to 40% of a content rate of $La^{3+}$; 15% to 65% of a content rate of $Ti^{4+}$; more than 0% and up to 20% of a content rate of $Zr^{4+}$; 0% to 20% of a content rate of $Si^{4+}$, wherein $B^{3+}$ is not substantially contained.

And an optical glass comprising: by cation %, more than 0% and up to 40% of a content rate of $La^{3+}$; 15% to 65% of a content rate of $Ti^{4+}$; and more than 0% and up to 20% of a content rate of $Zr^{4+}$, wherein the optical glass further comprising at least one cation in the group consisting of $Si^{4+}$ and $Al^{3+}$.

And an optical glass manufactured by floating melting method, wherein, by cation %, $La^{3+}$, $Ti^{4+}$, and $Zr^4$ are contained as essential cationic components, and at least one cation in a group consisting of $Si^{4+}$, $Nb^{5+}$, $Ta^{5+}$ and $Al^{3+}$ is/are contained.

A second aspect according to the present invention is an optical element using the optical glass described above.

A third aspect according to the present invention is an optical system comprising the optical element described above.

A fourth aspect according to the present invention is an interchangeable camera lens comprising an optical system comprising the optical element described above.

A fifth aspect according to the present invention is a microscope objective lens comprising the optical system comprising the optical element described above.

A sixth aspect according to the present invention is an optical device comprising the optical system comprising the optical element described above.

A seventh aspect according to the present invention is a cemented lens having a first lens element and a second lens element, wherein at least one of the first lens element and the second lens element is the optical glass described above.

An eighth aspect according to the present invention is an optical system comprising the cemented lens described above.

A ninth aspect according to the present invention is a microscope objective lens comprising the optical system comprising the cemented lens described above.

A tenth aspect according to the present invention is an interchangeable camera lens comprising the optical system comprising the cemented lens described above.

An eleventh aspect according to the present invention is an optical device comprising the optical system comprising the cemented lens described above.

BRIEF DESCRIPTION OF DRAWINGS

FIG. 1 is a perspective view illustrating an example of an optical device as an imaging device according to the present embodiment.
FIG. 2 is a schematic diagram illustrating another example of an optical device as an imaging device according to the present embodiment, and it is a front view of the imaging device.
FIG. 3 is a schematic diagram illustrating another example of an optical device as an imaging device according to the present embodiment, and it is a back view of the imaging device.
FIG. 4 is a block diagram illustrating an example of a configuration of a multi-photon microscope according to the present embodiment.
FIG. 5 is a schematic diagram illustrating an example of a cemented lens according to the present embodiment.
FIG. 6 is a schematic diagram of an overall configuration of a gas jet floating furnace according to the present embodiment.
FIG. 7 is an enlarged schematic diagram of a pedestal on a stage of the gas jet floating furnace according to the present embodiment.
FIG. 8 is a graph in which an optical constant value ($\nu_d$ -$P_{g,\ F}$) of each example is plotted.
FIG. 9 is a graph in which an optical constant value ($\nu_d$ -$n_d$) of each example is plotted.

DETAILED DESCRIPTION

Hereinafter, description is made on an embodiment of the present invention (hereinafter, referred to as the "present embodiment"). The present embodiment described below is an example for describing the present invention, and is not intended to limit the present invention to the contents described below. The present invention can be appropriately modified and implemented within the scope of the gist.

Further, the expression that a Q content ratio is "0 - N%" is an expression that includes a case where the Q component is not included and a case where the Q component is more than 0% and is N% or less.

Further, the expression "does not contain a Q component" means that this Q component is substantially not contained, and the content of this component is about an impurity level or less. Impurity level or less means, for example, that it is less than 0.01%.

The expression "devitrification resistance stability" means the resistance to devitrification of glass. Here, "devitrification" refers to a phenomenon in which the transparency of the glass is lost due to crystallization or phase division that occurs when the glass is heated above the glass transition temperature or when the temperature is lowered from the melt state to the liquid phase temperature or lower.

<Optical Glass>

In an optical glass according to the present embodiment, by cation %, a content rate of $La^{3+}$ is more than 0% and up to 40%, a content rate of $Ti^{4+}$ is from 15% to 65%, a content rate of $Zr^{4+}$ is more than 0% and up to 20%, wherein a refractive index ($n_d$) with respect to a d-line measured by V-block method or minimum declination method is from 2.00 to 2.35.

And in an optical glass, by cation %, a content rate of $La^{3+}$ is more than 0% and up to 40%, a content rate of $Ti^{4+}$ is from 15% to 65%, a content rate of $Zr^{4+}$ is more than 0% and up to 20%, a content rate of $Si^{4+}$ is from 0% to 20%, and a total content rate of $Ti^{4+}$, $Zr^{4+}$ and $Si^{4+}$ ($Ti^{4+} + Zr^{4+} + Si^{4+}$) is from 40% to 80%.

And in an optical glass, by cation %, a content rate of $La^{3+}$ is more than 0% and up to 40%, a content rate of $Ti^{4+}$ is from 15% to 65%, a content rate of $Zr^{4+}$ is more than 0% and up to 20%, a content rate of $Si^{4+}$ is from 0% to 20%, wherein $B^{3+}$ is not substantially contained.

And in an optical glass, by cation %, a content rate of $La^{3+}$ is more than 0% and up to 40%, a content rate of $Ti^{4+}$ is from 15% to 65%, a content rate of $Zr^{4+}$ is more than 0% and up to 20%, wherein the optical glass further comprises at least one cation in the group consisting of $Si^{4+}$ and $Al^{3+}$.

And in an optical glass manufactured by floating melting method (aerodynamic levitation method), by cation %, $La^{3+}$, $Ti^{4+}$, and $Zr^4$ are contained as essential cationic components, and at least one cation in a group consisting of $Si^{4+}$, $Nb^{5+}$, $Ta^{5+}$ and $Al^{3+}$ is/are contained.

Note that, in the present specification, a content rate of each component is all expressed by cation % unless otherwise stated. Cation% refers to the ratio of the number of moles of the target cation to the total number of moles of cation contained in the optical glass. More specifically, when it is composed of $SiO_2$ 50mol and $Na_2O$ 50mol, in cation! notation, $Si^{4+}$ is 33.3% and $Na^+$ is 66.7%. Further, an aspect of each cation is not particularly limited, but a cation may be contained in an optical glass in a form of an oxide and the like, for example.

The optical glass according to the present embodiment is a new optical glass that can be vitrified even when a content rate of cation constituting a network former oxide such as $SiO_2$ and $B_2O_3$ is low. Then, the optical glass according to the present embodiment can have a high refractive index, low dispersibility (wavelength dependency of a refractive index), low specific gravity and devitrification resistance stability at a high level. Furthermore, with a composition according to the present embodiment, a large glass gob can be stably manufactured.

First, description is made on each component of the optical glass according to the present embodiment.

$La^{3+}$ is, for example, a component included as $La_2O_3$ in the oxide-converted composition. $La^{3+}$ has an effect of increasing a refractive index without impairing low dispersibility, and can also maintain devitrification resistance stability of glass. However, as the content rate increases, the specific gravity tends to increase. From such a viewpoint, the content rate of $La^{3+}$ is more than 0% and up to 40%. Then a lower limit thereof is preferably 5%, more preferably 10% and further more preferably 20%. And an upper limit thereof is preferably 35%, more preferably 32% and further preferably 30%.

$Ti^{4+}$ is, for example, a component included as $TiO_2$ in the oxide-converted composition. $Ti^{4+}$ can increase a refractive index and maintain low specific gravity at the same time. From viewpoints of such an effect and content rates of rare-earth components and transition metal components, the content rate of $Ti^{4+}$ is from 15% to 65%. Then a lower limit thereof is preferably 20%, more preferably 30% and further more preferably 40%. And an upper limit thereof is preferably 60%, more preferably 55% and further preferably 52%.

$Zr^{4+}$ is, for example, a component included as $ZrO_2$ in the oxide-converted composition. $Zr^{4+}$ has an effect of increasing devitrification resistance stability and a refractive index while maintaining low dispersibility. When this content rate is too low, dispersibility increases, when this content rate exceeds 20%, glass is more likely to be devitrified. From such a viewpoint, the content rate of $Zr^{4+}$ is more than 0% and up to 20%. Then a lower limit thereof is preferably 1%, more preferably 5% and further more preferably 8%. And an upper limit thereof is preferably 18%, more preferably 15% and further preferably 12%.

A $Si^{4+}$ component is, for example, a component that is included as $SiO_2$ in an oxide-converted composition and constitutes a network former oxide. $Si^{4+}$ is a component capable of increasing fusibility and devitrification resistance stability while maintaining low specific gravity. When this content rate exceeds 20%, sufficient fusibility cannot be acquired, and a refractive index tends to decrease further. From such a viewpoint, the content rate of $Si^{4+}$ is from 0% to 20%. Then a lower limit thereof is preferably 1%, more preferably 4% and further more preferably 7%. And an upper limit thereof is preferably 18%, more preferably 16% and further preferably 14%.

$Ta^{5+}$ is, for example, a component included as $Ta_2O_5$ in the oxide-converted composition. $Ta^{5+}$ has an effect of increasing devitrification resistance stability while maintaining low dispersibility. From such a viewpoint, the content rate of $Ta^{5+}$ is from 0% to 20%. Then a lower limit thereof is preferably 1%, more preferably 3% and further more preferably 4%. And an upper limit thereof is preferably 15%, more preferably 12% and further preferably 8%.

$Nb^{5+}$ is, for example, a component included as $Nb_2O_5$ in the oxide-converted composition. $Nb^{5+}$ can further improve low dispersibility of glass. From such a viewpoint, the content rate of $Nb^{5+}$ is from 0% to 30%. Then a lower limit thereof is preferably 2%, more preferably 5% and further more preferably 10%. And an upper limit thereof is preferably 25%, more preferably 20% and further preferably 15%.

$Ga^{3+}$ is, for example, a component included as $Ga_2O_3$ in the oxide-converted composition. $Ga^{3+}$ is a component increasing low dispersibility while maintaining devitrification resistance stability of the optical glass. From such a viewpoint, the content rate of $Ga^{3+}$ is from 0% to 20%. Then a lower limit thereof is preferably 1%, more preferably 5% and further more preferably 10%. And an upper limit thereof is preferably 18%, more preferably 15% and further preferably 13%.

$Gd^{3+}$ is, for example, a component included as $Gd_2O_3$ in the oxide-converted composition. $Gd^{3+}$ is a component capable of increasing a refractive index without impairing low dispersibility, and can further increase devitrification resistance stability by coexisting with $La^{3+}$ in glass in particular. From such a viewpoint, the content rate of $Gd^{3+}$ is from 0% to 25%. Then a lower limit thereof is preferably 2%, more preferably 4% and further more preferably 6%. And an upper limit thereof is preferably 20%, more preferably 15% and further preferably 10%. Then, both of $La^{3+}$ and $Gd^{3+}$ are preferably contained.

$Y^{3+}$ is, for example, a component included as $Y_2O_3$ in the oxide-converted composition. $Y^{3+}$ is a component capable of increasing a refractive index without impairing low dispersibility, and can further improve devitrification resistance stability by coexisting with $La^{3+}$ in glass in particular. From such a viewpoint, the content rate of $Y^{3+}$ is from 0% to 10%. Then a lower limit thereof is preferably 2%, more preferably 4% and further more preferably 6%. And an upper limit thereof is preferably 9%, more preferably 8% and further preferably 7%. Then, both of $La^{3+}$ and $Y^{3+}$ are preferably contained.

$B^{3+}$ is, for example, a component that is included as $B_2O_3$ in the oxide-converted composition and constitutes a network former oxide. Since $B^{3+}$ is a component having high volatility, a composition fluctuation of glass may be caused and stria may be manifested actualized during manufacturing when $B^{3+}$ is excessively introduced. From such a viewpoint, the content rate of $B^{3+}$ is from 0% to 18%. It is preferable that $B^{3+}$ is not substantially contained. If $B^{3+}$ is contained, a lower limit thereof is preferably 3%, more preferably 6% and further more preferably 9%. And an upper limit thereof is preferably 16%, more preferably 14% and further preferably 12%.

An $Al^{3+}$ component is, for example, a component included as $Al_2O_3$ in the oxide-converted composition. $Al^{3+}$ is a component capable of increasing fusibility during manufacturing of the optical glass and devitrification resistance stability of the optical glass. From such a viewpoint, the content rate of $Al^{3+}$ is from 0% to 5%. Then a lower limit thereof is preferably 1%, more preferably 2% and further more preferably 3%. And an upper limit thereof is preferably 5%, more preferably 4% and further preferably 3%.

$Ba^{2+}$ is, for example, a component included as $BaO$ in the oxide-converted composition. $Ba^{2+}$ is a component increasing low dispersibility while maintaining devitrification resistance stability of the optical glass. From such a viewpoint, the content rate of $Ba^{2+}$ is from 0% to 30%. Then a lower limit thereof is preferably 2%, more preferably 5% and further more preferably 8%. And an upper limit thereof is preferably 25%, more preferably 20% and further preferably 15%.

A total content rate of $Ti^{4+}$, $Zr^{4+}$ and $Si^{4+}$ ($Ti^{4+} + Zr^{4+} + Si^{4+}$) is from 40% to 80%. A lower limit thereof is preferably 45%, more preferably 55% and further more preferably 60%. And an upper limit thereof is preferably 78%, more preferably 76% and further preferably 74%. By setting ($Ti^{4+} + Zr^{4+} + Si^{4+}$) as above range, a refractive index can be increased and low specific gravity can be maintained at the same time.

A total content rate of $La^{3+}$, $Y^{3+}$, $Gd^{3+}$ and $Ba^{2+}$ ($La^{3+} + Y^{34} + Gd^{3+} + Ba^{2+}$) is from 20% to 40%. A lower limit thereof is preferably 22%, more preferably 24% and further more preferably 26%. And an upper limit thereof is preferably 38%, more preferably 36% and further preferably 34%. By setting ($La^{3+} + Y^{3+} + Gd^{3+} + Ba^{2+}$) as above range, low dispersibility can be increased while maintaining devitrification resistance stability of the optical glass.

A ratio of the content rate of a total content rate of $La^{3+}$, $Y^{3+}$, $Gd^{3+}$ and $Ba^{2+}$ to a total content rate of $Ti^{4+}$, $Zr^{4+}$, and $Si^{4+}$ (($La^{3+} + Y^{3+} + Gd^{3+} + Ba^{2+}$) / ($Ti^{4+} + Zr^{4+} + Si^{4+}$)) is from 0.30 to 0.65. Then a lower limit of the ratio is preferably 0.34, more preferably 0.36 and further more preferably 0.37. And an upper limit of the ratio is preferably 0.62, more preferably 0.58 and further preferably 0.54. By setting (($La^{3+} + Y^{3+} + Gd^{3+} + Ba^{2+}$) / ($Ti^{4+} + Zr^{4+} + Si^{4+}$)) as above range, the specific gravity can be reduced while maintaining devitrification resistance stability of the optical glass, and a refractive index can be increased too.

A ratio of the content rate of $Si^{4+}$ to a total content rate of $Ti^{4+}$ and $Zr^{4+}$ ($Si^{4+}/ (Ti^{4+} + 2r^{4+})$) is from 0 to 0.50. Then a lower limit of the ratio is preferably 0.05, more preferably 0.10 and further more preferably 0.15. And an upper limit of the ratio is preferably 0.40, more preferably 0.35 and further preferably 0.30. By setting $Si^{4+}/ (Ti^{4+} + Zr^{4+})$ as above range, stability of the optical glass can be increased while maintaining a high refractive index.

A ratio of the content rate of $La^{3+}$ to a total content rate of $Ti^{4+}$ and $Zr^{4+}$ ($La^{3+}/ (Ti^{4+} + Zr^{4+})$) is from 0.05 to 0.95. Then a lower limit of the ratio is preferably 0.10, more preferably 0.20 and further more preferably 0.35. An upper limit of the ratio is preferably 0.90, more preferably 0.75 and further preferably 0.60. By setting $La^{3+}/ (Ti^{4+} + Zr^{4+})$ as above range, a high refractive index and low dispersibility can be increased while maintaining devitrification resistance stability of the optical glass.

In addition, as necessary, for the purpose of clarifying, coloring, decolorization, fine adjustment of optical constant values, etc., a known clarifying agent, a colorant, a defoaming agent, a fluorine compound, and other components can be added to the glass composition in an appropriate amount. Further, not limited to the above components, other components can be added within the range where the effect of the optical glass according to the present embodiment can be obtained.

As the raw material, it is preferable to use a high-purity product with a low content rate of impurities. A high-purity product contains 99.85% by mass or more of the component. By using a high-purity product, the amount of impurities decreases, and as a result, the internal transmittance of the optical glass tends to be high.

Next, description is made on physical property values of the optical glass according to the present embodiment.

From the viewpoint of reducing the thickness of the lens, it is desirable that the optical glass according to the present embodiment has a high refractive index (large refractive index ($n_d$)). However, in general, the higher the refractive index ($n_d$), the lower the transmittance tends to be. Based on such a situation, the refractive index ($n_d$) with respect to d rays in the optical glass according to the present embodiment is preferably in the range of 2.00-2.35. Then a lower limit of the refractive index ($n_d$) is more preferably 2.05 and further more preferably 2.10. And an upper limit of the refractive index ($n_d$) is more preferably 2.30 and further preferably 2.25. Note that the refractive index ($n_d$) is a value measured by the V block method or the minimum declination method.

An abbe number ($v_d$) of the optical glass according to the present embodiment is preferably in the range of 15 to 25. Then a lower limit of the abbe number ($v_d$) is more preferably 17 and further more preferably 19. An upper limit of the abbe number ($v_d$) is more preferably 23 and further preferably 22. Note that the Abbe number ($v_d$) is a value calculated based on the refractive index measured by the V block method or the minimum declination method.

From the viewpoint of lens aberration correction, a partial dispersion ratio ($P_{g, F}$) of the optical glass according to the present embodiment is preferably in the range of 0.615-0.650. Then a lower limit of the partial dispersion ratio (P$_{g, F}$) is more preferably 0.618 and further more preferably 0.619. An upper limit of the partial dispersion ratio (P$_{g, F}$) is more preferably 0.648 and further preferably 0.646. And the partial dispersion ratio (P$_{g, F}$) of the optical glass according to the present embodiment preferably satisfies the following equation (1).

$$-0.00607 \times \nu_d + 0.752 < P_{g, F} < -0.00607 \times \nu_d + 0.762 \ldots (1)$$

Note that the partial dispersion ratio (P$_{g, F}$) is a value calculated based on the refractive index measured by the V block method or the minimum declination method.

From the viewpoint of lens aberration correction, it is desirable that the optical glass according to the present embodiment has positive abnormal dispersibility (ΔP$_{g, F}$). Based on such a situation, abnormal dispersibility (ΔP$_{g, F}$) of the optical glass according to the present embodiment is preferably 0.013-0.031. Note that abnormal dispersibility is a value calculated based on the refractive index measured by the V block method or the minimum declination method.

The optical glass according to the present embodiment preferably has a temperature difference (ΔT = T$_x$ - T$_g$) between the glass transition temperature (T$_g$) and the crystallization start temperature (T$_x$) of 70 degrees Celsius - 200 degrees Celsius. Then a lower limit thereof is more preferably 100 degrees Celsius and further more preferably 120 degrees Celsius. And an upper limit thereof is more preferably 190 degrees Celsius and further preferably 180 degrees Celsius. ΔT can be used as an index of devitrification resistance stability. In general, high ΔT means high devitrification resistance stability of glass. Then, in the present embodiment, both of the glass transition temperature (T$_g$) and the crystallization start temperature (T$_x$) can be measured by a differential thermal analysis.

The optical glass according to the present embodiment preferably has a specific gravity (S$_g$) of 5.4 or less. Then a lower limit of the specific gravity is more preferably 4.7 and further more preferably 4.8. And an upper limit of the specific gravity is more preferably 5.3 and further preferably 5.2.

The optical glass according to the present embodiment preferably has a diameter (D) of 6 mm or more, more preferably 8 mm or more, further more preferably 9 mm or more, and still more preferably 10 mm or more. Referenced herein, "diameter" refers to the maximum value in the diameter direction of the glass gob, and in the case of a substantially spherical shape, it refers to the diameter value.

The optical glass according to the present embodiment preferably has a thickness (T) of 4 mm or more, more preferably 4.5 mm or more, further more preferably 5 mm or more. Referenced herein, "thickness" refers to the height in the direction perpendicular to the maximum diameter (diameter (D)) of the glass gob, and in the case of a substantially spherical shape, it refers to the diameter value.

From the viewpoint described above, the optical glass according to the present embodiment can be suitably used as an optical element included in, for example, an optical instrument. Such optical elements include mirrors, lenses, prisms, filters, and the like. Examples of the optical system in which the optical element is used include an objective lens, a light collecting lens, an imaging lens, an interchangeable camera lens, and the like. And these optical systems can be suitably used for various optical devices of imaging devices such as interchangeable lens cameras and non-interchangeable lens cameras, and microscope apparatuses such as fluorescence microscopes and multiphoton microscopes. Such optical devices are not limited to the above-described imaging devices and microscopes, and include telescopes, binoculars, laser distance meters, projectors, and the like, but are not limited thereto. Examples of these will be described below.

<Imaging Devices

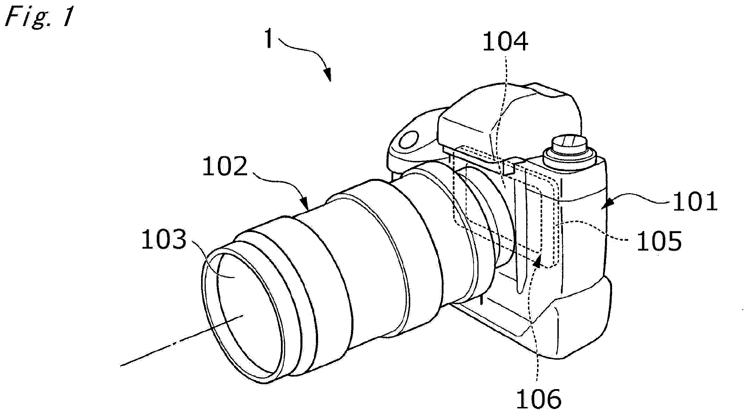

FIG. 1 is a perspective view showing an example in which the optical device according to the present embodiment is used as an imaging device. An imaging device 1 is a so-called digital single-lens reflex camera (a lens-interchangeable camera), and a photographing lens 103 (an optical system) includes an optical element including, as a base material, the optical glass according to the present embodiment. A lens barrel 102 is mounted to a lens mount (not illustrated) of a camera body 101 in a removable manner. An image is formed with light, which passes through the lens 103 of the lens barrel 102, on a sensor chip (solid-state imaging elements) 104 of a multi-chip module 106 arranged on a back surface side of the camera body 101. The sensor chip 104 is a so-called bare chip such as a CMOS image sensor. The multi-chip module 106 is, for example, a Chip On Glass (COG) type module including the sensor chip 104 being a bare chip mounted on a glass substrate 105.

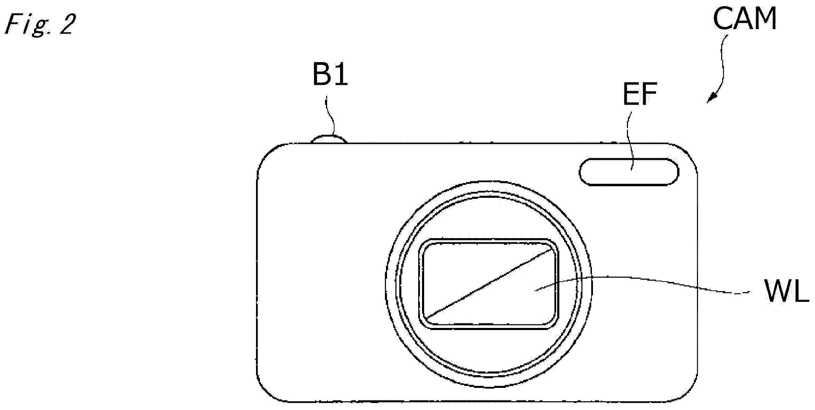

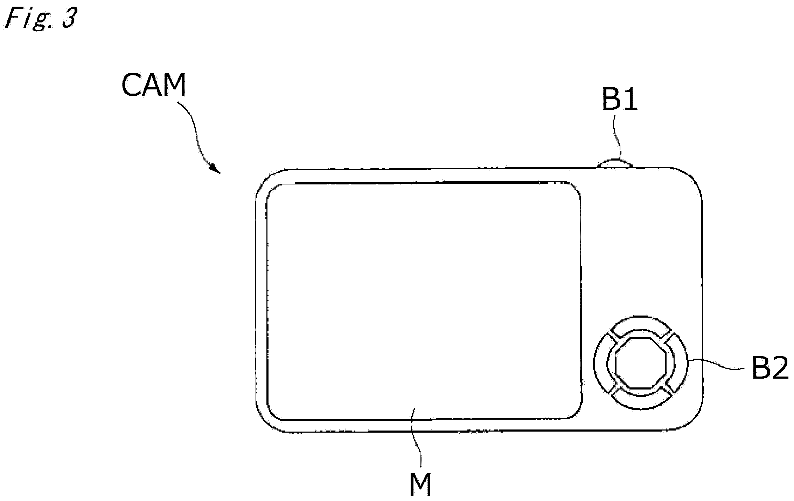

FIG. 2 and 3 are schematic diagrams showing another example in which the optical device according to the present embodiment is used as an imaging device. FIG. 2 shows a front view of the imaging device CAM, and FIG. 3 shows a rear view of the imaging device CAM. The imaging device CAM is a so-called digital still camera (non-interchangeable lens cameras), and a photographing lens WL (an optical system) includes an optical element including, as a base material, the optical glass according to the present embodiment.

When a power button (not illustrated) of the imaging device CAM is pressed, a shutter (not illustrated) of the photographing lens WL is opened, light from an object to be imaged (a body) is converged by the photographing lens WL and forms an image on imaging elements arranged on an image surface. An object image formed on the imaging elements is displayed on a liquid crystal monitor M arranged on the back of the imaging device CAM. After determining the composition of the subject image while looking at the liquid crystal monitor M, the photographer presses down the release button B1 to capture the subject image with the image sensor, and records and saves it in a memory (not illustrated).

An auxiliary light emitting unit EF that emits auxiliary light in a case that the object is dark and a function button B2 to be used for setting various conditions of the imaging device CAM and the like are arranged on the imaging device CAM.

The optical system used in such a digital camera or the like is required to have higher resolution, low chromatic aberration, and miniaturization. In order to realize these, it is effective to use glasses with different dispersion characteristics in the optical system. In particular, the demand for glass with low dispersion but higher partial dispersion ratio ($P_{g, F}$) is high. From this viewpoint, the optical glass according to the present embodiment is suitable as a member of the optical device. Note that examples of the optical device applicable in the present embodiment include not only the above-described imaging device but also a projector and the like. The optical element is not limited to a lens, and examples thereof include prisms and the like.

<Microscope>

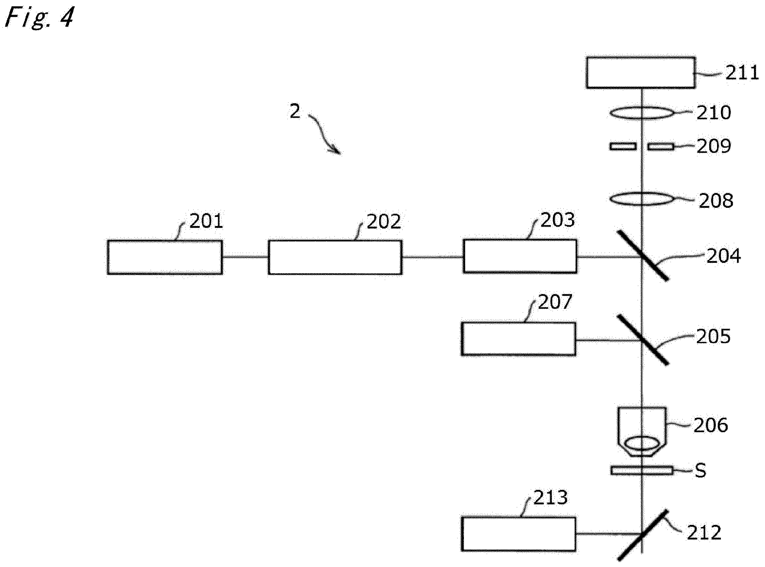

FIG. 4 is a block diagram illustrating an example of a configuration of a multi-photon microscope 2 according to the present embodiment. A multi-photon microscope 2 includes an objective lens 206, a condensing lens 208, and an image forming lens 210. At least one of the objective lens 206, the condensing lens 208, and the image forming lens 210 includes an optical element including, as a base material, the optical glass according to the present embodiment. Hereinafter, description is mainly made on the optical system of the multi-photon microscope 2.

A pulse laser device 201 emits ultrashort pulse light having, for example, a near infrared wavelength (approximately 1,000 nm) and a pulse width of a femtosecond unit (for example, 100 femtoseconds). In general, ultrashort pulse light immediately after being emitted from the pulse laser device 201 is linearly polarized light that is polarized in a predetermined direction.

A pulse division device 202 divides the ultrashort pulse light, increases a repetition frequency of the ultrashort pulse light, and emits.

A beam adjustment unit 203 has a function of adjusting a beam diameter of the ultrashort pulse light, which enters from the pulse division device 202, to a pupil diameter of the objective lens 206, a function of adjusting convergence and divergence angles of the ultrashort pulse light in order to correct chromatic aberration (a focus difference) on an axis of a wavelength of light emitted from a sample S and the wavelength of the ultrashort pulse light, a pre-chirp function (group velocity dispersion compensation function) providing inverse group velocity dispersion to the ultrashort pulse light in order to correct the pulse width of the ultrashort pulse light, which is increased due to group velocity dispersion at the time of passing through the optical system, and the like.

The ultrashort pulse light emitted from the pulse laser device 201 has a repetition frequency increased by the pulse division device 202, and is subjected to the above-mentioned adjustments by the beam adjustment unit 203. Furthermore, the ultrashort pulse light emitted from the beam adjustment unit 203 is reflected on a dichroic mirror 204 in a direction toward a dichroic mirror, passes through the dichroic mirror 205, is converged by the objective lens 206, and is radiated to the sample S. At this time, an observation surface of the sample S may be scanned with the ultrashort pulse light through use of scanning means (not illustrated).

For example, when fluorescence observation of sample S, in the irradiated region of the ultrashort pulsed light of the sample S and in the vicinity thereof, the fluorescent dye on which the sample S is stained is multiphoton excited, and fluorescence with a wavelength shorter than ultrashort pulsed light, which is an infrared wavelength (hereinafter referred to as "observation light".), is emitted.

The observation light emitted from the sample S in a direction toward the objective lens 206 is collimated by the objective lens 206, and is reflected on the dichroic mirror 205 or passes through the dichroic mirror 205 depending on the wavelength.

The observation light reflected on the dichroic mirror 205 enters a fluorescence detection unit 207. For example, the fluorescence detection unit 207 is formed of a barrier filter, a photo multiplier tube (PMT), or the like, receives the observation light reflected on the dichroic mirror 205, and outputs an electronic signal depending on an amount of the light. The fluorescence detection unit 207 detects the observation light over the observation surface of the sample S, in conformity with the ultrashort pulse light scanning on the observation surface of the sample S.

Note that, all the observation light emitted from the sample S in a direction toward the objective lens 206 may be detected by the fluorescence detection unit 211 by excluding the dichroic mirror 205 from the optical path. In this case, the observation light is de-scanned by scanning means (not illustrated), passes through the dichroic mirror 204, is converged by the condensing lens 208, passes through a pinhole 209 provided at a position substantially conjugate to a focal position of the objective lens 206, passes through the image forming lens 210, and enters a fluorescence detection unit 211.

For example, the fluorescence detection unit 211 is formed of a barrier filter, a PMT, or the like, receives the observation light formed at the reception surface of the fluorescence detection unit 211 by the image forming lens 210, and outputs an electronic signal depending on an amount of the light. The fluorescence detection unit 211 detects the observation light over the observation surface of the sample S, in conformity with the ultrashort pulse light scanning on the observation surface of the sample S.

The observation light emitted from the sample S in a direction opposite to the objective lens 206 is reflected on a dichroic mirror 212, and enters a fluorescence detection unit 213. The fluorescence detection unit 113 is formed of, for example, a barrier filter, a PMT, or the like, receives the observation light reflected on the dichroic mirror 212, and outputs an electronic signal depending on an amount of the light. The fluorescence detection unit 213 detects the observation light over the observation surface of the sample S, in conformity with the ultrashort pulse light scanning on the observation surface of the sample S.

The electronic signals output from the fluorescence detection units 207, 211, and 213 are input to, for example, a computer (not illustrated). The computer is capable of generating an observation image, displaying the generated observation image, storing data on the observation image, based on the input electronic signals.

< Cemented lens>

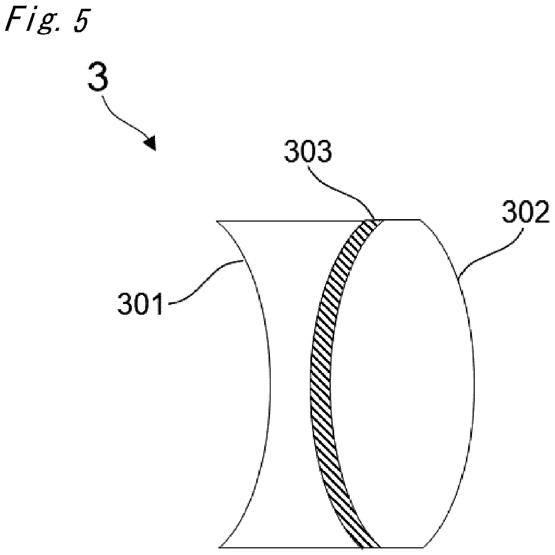

FIG. 5 is a schematic diagram illustrating an example of a cemented lens according to the present embodiment. The cemented lens 3 is a composite lens having a first lens element 301 and a second lens element 302. At least one of the first lens element and the second lens element uses the optical glass according to the present embodiment. The first lens element and the second lens element are joined via a joint member 303. As the joint member 303, a known adhesive or the like can be used. Note that "lens component" means each lens constituting a single lens or a cemented lens.

The cemented lens according to the present embodiment is useful from the viewpoint of chromatic aberration correction, and can be suitably used for the above-described optical elements, optical systems, optical devices, and the like. And the optical system including the cemented lens can be particularly suitably used for interchangeable camera lenses, optical devices, and the like. Note that in the above-described aspect, a cemented lens using two lens components has been described, but is not limited thereto, and may be a cemented lens using three or more lens components. When a cemented lens using three or more lens components is used, at least one of the three or more lens components may be formed using the optical glass according to the present embodiment.

<Method for Manufacturing Optical Glass>

The optical glass according to the present embodiment can be manufactured by using a floating furnace, for example. There are electrostatic, electromagnetic, sonic, magnetic, and gas jet floating furnaces, and the like, which are not particularly limited, but a gas jet floating furnace is preferably used for floating fusion of an oxide. Hereinafter, a manufacturing method using a gas jet floating furnace will be described as one example.

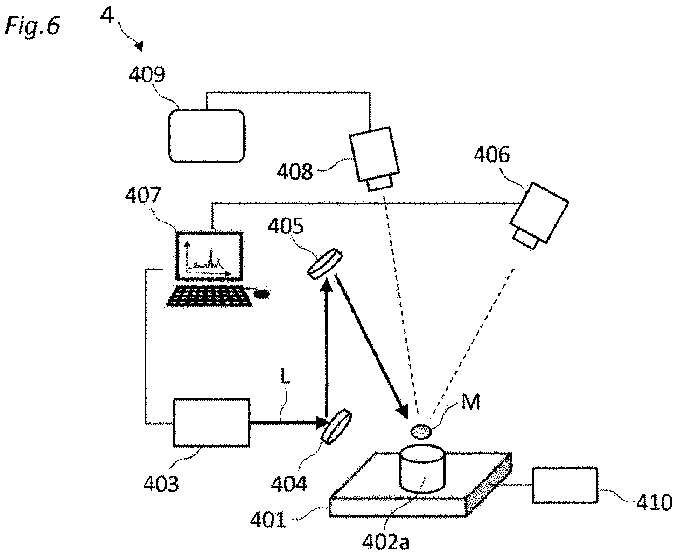

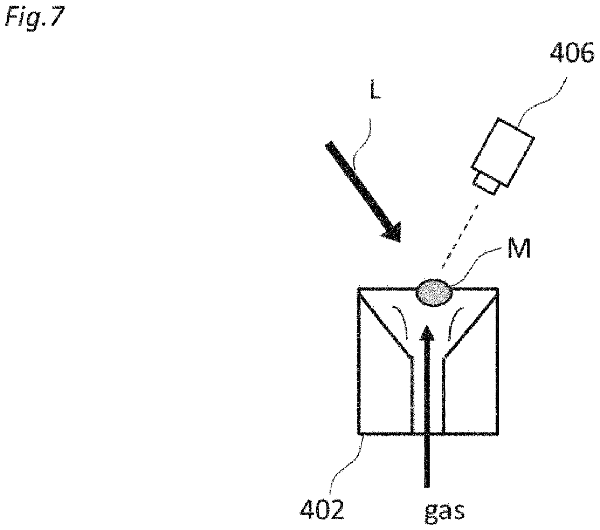

FIG. 6 illustrates a schematic diagram of an overall configuration of the gas jet floating furnace, and FIG. 7 is an enlarged schematic diagram of a pedestal on a stage of the gas jet floating furnace.

In a gas jet floating furnace 4, a raw material M is disposed on a pedestal 402 on a stage 401. Then, laser light L emitted from a laser light source 403 is applied to the raw material M via a mirror 404 and a mirror 405. A temperature of the raw material M heated by application of the laser light L is monitored by a radiation thermometer 406. Output of the laser light source 403 is controlled by a computer 407, based on temperature information of the raw material M monitored by the radiation thermometer 406. Further, a state of the raw material M is captured by a CCD camera 408, and is output to a monitor 409 (see FIG. 6). Note that, for example, a carbon dioxide gas laser can be used as a laser light source.

In the gas jet floating furnace 4, the raw material M is in a floating state due to gas sent to the pedestal (see FIG. 7). A flow rate of gas sent to the pedestal is controlled by a gas flow rate regulator 410. For example, non-contact heating can be performed by the laser light L with the raw material M in a floating state by jetting gas from a nozzle having a conical hole. When the raw material M is fused, the raw material M has a spherical shape or an elliptical shape due to its own surface tension, and floats in this state.

Subsequently, when the laser light L is cut off, the raw material that has been brought into a melted liquid state is cooled to acquire a transparent glass. Note that a kind of gas is not particularly limited, and publicly known gas may be adopted as appropriate. Examples of the gas include oxygen, nitrogen, carbon dioxide, argon, air, and the like. A shape of a nozzle and a heating method are not particularly limited, and a publicly known method may be adopted as appropriate.

In the related art, for example, when an optical glass has been manufactured by using a container such as a crucible, a lot of network former oxides such as $SiO_2$, $B_2O_3$, $P_2O_5$, and $GeO_2$ has needed to be contained to increase glass formation performance. Thus, in a case of a glass composition having a great content amount of a material that is not a network former oxide and a small content amount of the network former oxide described above, there has been a circumstance where crystallization (non-uniform nucleation) with a container-melted liquid interface as an origin occurs, and vitrification cannot often be achieved. A glass gob has been sometimes used as a material of an optical lens of various types of optical equipment, but it has been desired that a large glass gob can be stably manufactured.

In this regard, in the present embodiment, for example, when an optical glass is manufactured by a method using the floating furnace described above, there is no contact between a container and a melted liquid, and thus non-uniform nucleation can be suppressed to the maximum. As a result, glass formation from a melted liquid can be greatly promoted, and vitrification can be achieved even with a composition that cannot be manufactured in crucible fusion and has a small content amount of a network former oxide or does not contain the network former oxide at all. By adopting the manufacturing method, the optical glass having a composition system according to the present embodiment in which vitrification could not have been achieved in the related art can be manufactured. Furthermore, a large glass gob as described above can also be manufactured. In addition, the optical glass according to the present embodiment has a high refractive index and has a high abbe number. Since the optical glass according to the present embodiment has many advantages as described above, the optical glass can be applied as a high-refractive low-dispersibility glass material and a wide-band transparent material.

Examples

Next, description is made on examples and comparative examples below, but the present invention is not limited at all by examples below.

<Manufacturing of Optical Glass>

An optical glass in each example and comparative example 1, 2 has been manufactured according to the following procedure by using the gas jet floating furnace 4 illustrated in FIG.6 and 7. First, the glass raw material selected from the oxide was weighed so as to have the composition (cation %) described in each table. Further, the glass raw material may be selected from hydroxide, carbonate, nitrate, sulfate. Next, the weighed raw materials were mixed in an alumina mortar. This raw material was uniaxially pressurized at 20 MPa, and was formed into a columnar pellet. The acquired pellet was baked at 1000 to 1300 degrees Celsius in an electric furnace for 6 to 12 hours in the atmosphere to manufacture a sintered body. The acquired sintered body was roughly crushed, and 50 to 4100 mg was collected and installed on a nozzle of a pedestal. Then, the raw material was melted by applying a carbon dioxide gas laser from above while jetting air gas. The melted raw material had a spherical shape or an elliptical shape due to its own surface tension, and was brought into a floating state by pressure of the gas. Laser output was cut off with the raw material completely melted, and the raw material was cooled to acquire a glass gob (glass sphere) having a diameter of 6.88 - 15.40 mm, a thickness 4.6 - 6.4 mm for each example. In all the glass in each example, volatilization visible during fusion was not confirmed, and an air bubble and devitrification were also not confirmed.

The optical glass of comparative example 3 was produced by the following procedure using crucibles as in the same manner as ordinary optical glass. First, the glass raw materials of oxide, hydroxide, and carbonate were weighed so as to obtain the chemical composition (cation!) described in the table. Next, the weighed raw materials were mixed and put into platinum crucibles, melted at a temperature of about 1400 degrees Celsius for about 1 hour, and stirred and homogenized. Thereafter, a sample was obtained by lowering to an appropriate temperature, casting in a mold or the like, and slowly cooling.

<Evaluation of physical properties>

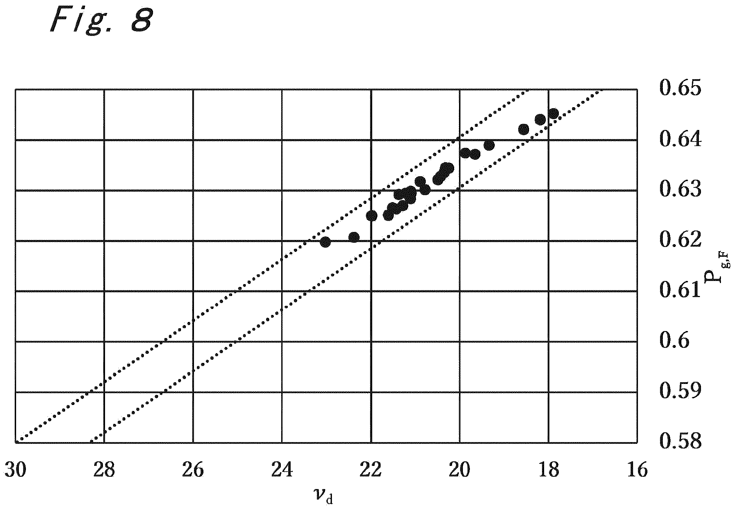

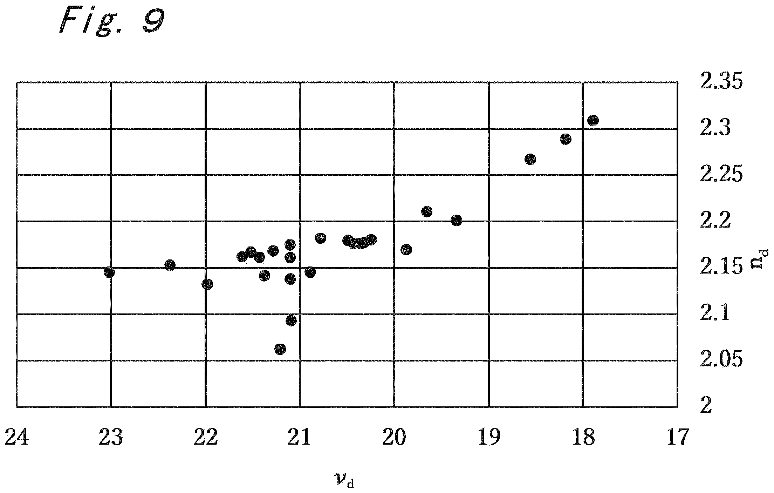

FIG. 8, 9 is a graph in which an optical constant value of each example is plotted.

Measurement of Crystallization start temperature ($T_x$), Glass transition temperature ($T_g$), Temperature difference ($\Delta T$) therebetween

Both of a crystallization start temperature ($T_x$) and a glass transition temperature ($T_g$) were measured by a differential thermal analysis (rising temperature 10 degrees Celsius/min) in a temperature rising process to acquire a temperature difference ($\Delta T$) of $T_x$ - $T_g$.

Specific gravity ($S_g$)

The specific gravity ($S_g$) of each sample was measured by a dry density meter (manufactured by Shimadzu Corporation; "Accubic II 1340"). The value of specific gravity was up to three decimal places.

Diameter (D), Thickness (T)

The diameter (D) and the thickness (T) of each sample were measured with an electronic caliper.

Refractive Index ($n_d$) and Abbe Number ($v_d$)

Examples 1 ~ 23 out of Examples 1 ~ 26 perform prism processing of the sample at 90 degrees, and a refractive index measuring instrument (manufactured by Carnew Optical Industry Co., Ltd.; "KPR-3000") was used to measure the refractive index by the V-block method, and the Abbe number, partial dispersion ratio, and abnormal dispersibility were calculated. Examples 24 - 26 show that the sample is prismed at 40 degrees and a precision refractive index measuring instrument (manufactured by TRIOPTICS; "Spectro Master HR") was used to measure the refractive index by the minimum declination method, and the Abbe number, partial dispersion ratio, and abnormal dispersibility were calculated.

In Comparative Examples 1 and 2, the refractive index was measured by a prism coupling method using a prism coupler (manufactured by Metricon, model "2010 / M") and the Abbe number was calculated. In Comparative Example 3, a refractive index measuring instrument (manufactured by Carnew Optical Industry Co., Ltd. "KPR-3000") in the same manner as Examples 1 ~ 23 was used to measure the refractive index by the V-block method, and the Abbe number, partial dispersion ratio, and abnormal dispersibility were calculated.

In the prism coupling method, a glass sample was polished, the polished surface was placed in close contact with a single crystal rutile prism, and the total reflection angle when light of the measurement wavelength was incident was measured to obtain the refractive index. The three wavelengths of 473 nm, 594.1 nm, and 656 nm were measured five times each, and the average value was the measured value. Furthermore, fitting by the least squares method using the following Drude-Voigt dispersion formula (Math. 1) was performed on the obtained actual measured value, and the refractive index at the d line (587.562 nm), F line (486.133 nm), and C line (656.273 nm) and Abbe number ($v_d$) were calculated.

[Math. 1]

$$\frac{1}{n^2 - 1} = \frac{\pi m c^2}{e^2 N f}\left(\frac{1}{\lambda_0^2} - \frac{1}{\lambda^2}\right)$$

(n: refractive index, m: electron mass, c: light velocity, e: charge elementary quantity, N: the number of molecules per unit volume, f: oscillator strength, $\lambda_0$: natural resonance wavelength, $\lambda$: wavelength)

$n_d$ indicates the refractive index of the glass to light at 587.562 nm. The Abbe number ($v_d$) was obtained from the following equation (2). $n_C$ and $n_F$ indicate the refractive index of glass to light at wavelengths of 656.273 nm and 486.133 nm, respectively.

$$v_d = (n_d - 1) / (n_F - n_c) \ldots (2)$$

The value of the refractive index was up to 5 decimal places.

Partial dispersion ratio ($P_{g, F}$)

The partial dispersion ratio ($P_{g, F}$) of each sample indicates the ratio of partial dispersion ($n_g - n_F$) to the principal dispersion ($n_F - n_C$), and was obtained from the following equation (3). $n_g$ indicates the refractive index of glass to light at a wavelength of 435.835 nm. The value of the partial dispersion ratio ($P_{g, F}$) was up to 4 decimal places.

$$P_{g, F} = (n_g - n_F) / (n_F - n_c) \ldots (3)$$

Abnormal dispersibility ($\Delta P_{g, F}$)

The abnormal dispersibility ($\Delta P_{g, F}$) of each sample shows a bias from the partial dispersion ratio standard line based on two types of F2 and K7 as a glass having normal dispersibility. That is, on coordinates with the partial dispersion ratio ($P_{g, F}$) on the vertical axis and the Abbe number $\nu_d$ on the horizontal axis, the difference in ordinate coordinates between the straight line connecting the two glass species and the value of the glass to be compared is the bias of the partial dispersion ratio, that is, abnormal dispersion ($\Delta P_{g, F}$). In the above coordinate system, when the value of the partial dispersion ratio is located above the straight line connecting the reference glass species, the glass exhibits positive abnormal dispersibility ($+\Delta P_{g, F}$), and when it is located on the lower side, the glass exhibits negative abnormal dispersion ($-\Delta P_{g, F}$). Note that the Abbe numbers $\nu_d$ and partial dispersion ratios ($P_{g, F}$) of F 2 and K 7 are as follows.

F2: Abbe number $\nu_d$ =36.33, Partial dispersion ratio ($P_{g, F}$) = 0.5834
K7: Abbe number $\nu_d$ =60.47, Partial dispersion ratio ($P_{g, F}$) = 0.5429

The value of abnormal dispersibility ($\Delta P_{g, F}$) was up to 4 decimal places.

$$\Delta P_{g, F} = P_{g, F} - (-0.0016777 \times \nu_d + 0.6443513) \quad \cdots \quad (4)$$

Each table indicates compositions and physical properties in each example and each comparative example. Note that a content rate of each component is expressed with cation! unless otherwise stated.

[Table 1]

| Cation % | EXAMPLE 1 | EXAMPLE 2 | EXAMPLE 3 | EXAMPLE 4 | EXAMPLE 5 |
|---|---|---|---|---|---|
| $La^{3+}$ | 28.00 | 28.00 | 28.00 | 30.20 | 36.64 |
| $Ti^{4+}$ | 22.00 | 49.27 | 44.73 | 53.14 | 39.36 |
| $Zr^{4+}$ | 9.09 | 9.09 | 9.09 | 1.96 | 8.00 |
| $Si^{4+}$ | 13.64 | 13.64 | 13.64 | 14.71 | 12.00 |
| $Nb^{5+}$ | 22.73 | | | | |
| $Ta^{5+}$ | 4.55 | | 4.55 | | 4.00 |
| $Al^{3+}$ | | | | | |
| $Y^{3+}$ | | | | | |
| $Gd^{3+}$ | | | | | |
| $Ga^{3+}$ | | | | | |
| $B^{3+}$ | | | | | |
| $Ba^{2+}$ | | | | | |
| $Zn^{2+}$ | | | | | |
| $Sb^{3+}$ | | | | | |
| Total | 100.00 | 100.00 | 100.00 | 100.00 | 100.00 |
| $Ti^{4+}+Zr^{4+}+Si^{4+}$ | 44.73 | 72.00 | 67.45 | 69.80 | 59.36 |
| $La^{3+}+Y^{3+}+Gd^{3+}+Ba^{2+}$ | 28.00 | 28.00 | 28.00 | 30.20 | 36.64 |
| $(La^{3+}+Y^{3+}+Gd^{3+}+Ba^{2+})/(Ti^{4+}+Zr^{4+}+Si4+)$ | 0.63 | 0.39 | 0.42 | 0.43 | 0.62 |
| $Si^{4+}/(Ti^{4+}+Zr^{4+})$ | 0.44 | 0.23 | 0.25 | 0.27 | 0.25 |
| $La^{3+}/(Ti^{4+}+Zr^{4+})$ | 0.90 | 0.48 | 0.52 | 0.55 | 0.77 |
| Diameter (D)/mm | 10.05 | 11.10 | 11.80 | 8.22 | 7.88 |

(continued)

| Cation % | EXAMPLE 1 | EXAMPLE 2 | EXAMPLE 3 | EXAMPLE 4 | EXAMPLE 5 |
|---|---|---|---|---|---|
| Thickness (T) /mm | 4.98 | 5.44 | 5.80 | 4.96 | 5.10 |
| $T_g$/°C | 777 | 806 | 793 | 800 | 841 |
| $T_x$/°C | 905 | 986 | 943 | 941 | 971 |
| $T_x$-$T_g$/°C | 128 | 180 | 150 | 141 | 130 |
| Specific gravity ($S_g$) | 5.316 | 4.875 | 5.110 | 4.830 | 5.370 |
| $n_d$ | 2.15273 | 2.17780 | 2.16131 | 2.16977 | 2.14533 |
| nF | 2.18956 | 2.21938 | 2.20073 | 2.21204 | 2.18090 |
| nc | 2.13806 | 2.16142 | 2.14571 | 2.15317 | 2.13115 |
| $n_g$ | 2.22153 | 2.25615 | 2.23540 | 2.24956 | 2.21173 |
| $\nu_d$ | 22.38 | 20.32 | 21.10 | 19.87 | 23.02 |
| $P_{g,F}$ | 0.6207 | 0.6345 | 0.6299 | 0.6374 | 0.6198 |
| $\Delta P_{g,F}$ | 0.0139 | 0.0242 | 0.0210 | 0.0264 | 0.0141 |

[Table 2]

| Cation % | EXAMPLE 6 | EXAMPLE 7 | EXAMPLE 8 | EXAMPLE 9 | EXAMPLE 10 |
|---|---|---|---|---|---|
| La3+ | 26.10 | 18.91 | 24.64 | 24.78 | 9.82 |
| Ti4+ | 45.93 | 49.27 | 43.36 | 46.76 | 49.27 |
| $Zr^{4+}$ | 8.47 | 9.09 | 8.00 | 8.63 | 9.09 |
| $Si^{4+}$ | 12.71 | 13.64 | 12.00 | 10.35 | 13.64 |
| $Nb^{5+}$ | | | | | |
| $Ta^{5+}$ | | | | | |
| $Al^{3+}$ | | | | 2.59 | |
| $Y^{3+}$ | 6.78 | | | 6.90 | |
| $Gd^{3+}$ | | 9.09 | | | 18.18 |
| $Ga^{3+}$ | | | | | |
| B3+ | | | 12.00 | | |
| $Ba^{2+}$ | | | | | |
| $Zn^{2+}$ | | | | | |
| $Sb^{3+}$ | | | | | |
| Total | 100.00 | 100.00 | 100.00 | 100.00 | 100.00 |
| $Ti^{4+}$+$Zr^{4+}$+$Si^{4+}$ | 67.12 | 72.00 | 63.36 | 65.73 | 72.00 |
| $La^{3+}$+$Y^{3+}$+$Gd^{3+}$+$Ba^{2+}$ | 32.88 | 28.00 | 24.64 | 31.68 | 28.00 |
| $(La^{3+}+Y^{3+}+Gd^{3+}+ Ba^{2+}) / (Ti^{4+}+Zr^{4+} +Si4+)$ | 0.49 | 0.39 | 0.39 | 0.48 | 0.39 |
| $Si^{4+}/(Ti^{4+}+Zr^{4+})$ | 0.23 | 0.23 | 0.23 | 0.19 | 0.23 |
| $La^{3+}/ (Ti^{4+}+Zr^{4+})$ | 0.48 | 0.32 | 0.48 | 0.45 | 0.17 |

(continued)

| Cation % | EXAMPLE 6 | EXAMPLE 7 | EXAMPLE 8 | EXAMPLE 9 | EXAMPLE 10 |
|---|---|---|---|---|---|
| Diameter (D)/mm | 10.08 | 9.07 | 6.88 | 15.40 | 9.42 |
| Thickness (T)/mm | 5.60 | 5.30 | 4.60 | 6.40 | 5.01 |
| $T_g$/°C | 817 | 799 | 773 | 799 | 801 |
| $T_x$/°C | 945 | 974 | 970 | 905 | 909 |
| $T_x$-$T_g$/°C | 128 | 175 | 197 | 106 | 108 |
| Specific gravity ($S_g$) | 4.949 | 5.035 | 4.820 | 4.942 | 5.175 |
| $n_d$ | 2.16150 | 2.17650 | 2.14546 | 2.17487 | 2.18048 |
| $n_F$ | 2.20039 | 2.21783 | 2.18478 | 2.21475 | 2.22231 |
| $n_C$ | 2.14619 | 2.16026 | 2.12995 | 2.15909 | 2.16401 |
| $n_g$ | 2.23433 | 2.25426 | 2.21942 | 2.24973 | 2.25930 |
| $\nu_d$ | 21.43 | 20.44 | 20.89 | 21.11 | 20.25 |
| $P_{g,F}$ | 0.6264 | 0.6328 | 0.6318 | 0.6284 | 0.6345 |
| $\Delta P_{g,F}$ | 0.0180 | 0.0227 | 0.0225 | 0.0195 | 0.0241 |

[Table 3]

| Cation % | EXAMPLE 11 | EXAMPLE 12 | EXAMPLE 13 | EXAMPLE 14 | EXAMPLE 15 |
|---|---|---|---|---|---|
| $La^{3+}$ | 24.44 | 27.02 | 18.91 | 25.67 | 9.82 |
| $Ti^{4+}$ | 39.05 | 43.16 | 44.73 | 45.17 | 44.73 |
| $Zr^{4+}$ | 7.94 | 8.77 | 9.09 | 12.50 | 9.09 |
| $Si^{4+}$ | 11.90 | 16.67 | 13.64 | 12.50 | 13.64 |
| $Nb^{5+}$ | | | | | |
| $Ta^{5+}$ | 3.97 | 4.39 | 4.55 | 4.17 | 4.55 |
| $Al^{3+}$ | | | | | |
| $Y^{3+}$ | | | | | |
| $Gd^{3+}$ | | | | | |
| $Ga^{3+}$ | 12.70 | | | | |
| $B^{3+}$ | | | | | |
| $Ba^{2+}$ | | | 9.09 | | 18.18 |
| $Zn^{2+}$ | | | | | |
| $Sb^{3+}$ | | | | | |
| Total | 100.00 | 100.00 | 100.00 | 100.00 | 100.00 |
| $Ti^{4+}$+$Zr^{4+}$+$Si^{4+}$ | 58.89 | 68.60 | 67.45 | 70.17 | 67.45 |
| $La^{3+}$+$Y^{3+}$+$Gd^{3+}$+$Ba^{2+}$ | 24.44 | 27.02 | 28.00 | 25.67 | 28.00 |
| ($La^{3+}$+$Y^{3+}$+$Gd^{3+}$+ $Ba^{2+}$) / ($Ti^{4+}$+$Zr^{4+}$ +$Si^{4+}$) | 0.42 | 0.39 | 0.42 | 0.37 | 0.42 |

(continued)

| Cation % | EXAMPLE 11 | EXAMPLE 12 | EXAMPLE 13 | EXAMPLE 14 | EXAMPLE 15 |
|---|---|---|---|---|---|
| $Si^{4+}/ (Ti^{4+}+Zr^{4+})$ | 0.25 | 0.32 | 0.25 | 0.22 | 0.25 |
| $La^{3+}/ (Ti^{4+}+Zr^{4+})$ | 0.52 | 0.52 | 0.35 | 0.45 | 0.18 |
| Diameter (D)/mm | 7.71 | 11.57 | 11.12 | 10.64 | 9.63 |
| Thickness (T)/mm | 4.70 | 5.38 | 5.38 | 5.36 | 5.37 |
| $T_g/°C$ | 776 | 796 | 799 | 793 | 777 |
| $T_x/°C$ | 954 | 984 | 976 | 943 | 911 |
| $T_x-T_g/°C$ | 178 | 188 | 177 | 150 | 134 |
| Specific gravity ($S_g$) | 5.144 | 5.010 | 4.994 | 5.102 | 4.880 |
| nd | 2.13245 | 2.14171 | 2.13802 | 2.18222 | 2.09283 |
| nF | 2.16933 | 2.17997 | 2.17665 | 2.22299 | 2.12993 |
| nc | 2.11782 | 2.12656 | 2.12273 | 2.16612 | 2.07812 |
| $n_g$ | 2.20153 | 2.21357 | 2.21060 | 2.25883 | 2.16254 |
| $\nu_d$ | 21.98 | 21.38 | 21.10 | 20.79 | 21.09 |
| $P_{g,F}$ | 0.6250 | 0.6292 | 0.6295 | 0.6302 | 0.6295 |
| $\Delta P_{g,F}$ | 0.0175 | 0.0208 | 0.0205 | 0.0207 | 0.0205 |

[Table 4]

| Cation % | EXAMPLE 16 | EXAMPLE 17 | EXAMPLE 18 | EXAMPLE 19 | EXAMPLE 20 |
|---|---|---|---|---|---|
| $La^{3+}$ | 3.45 | 26.21 | 24.64 | 25.67 | 27.38 |
| $Ti^{4+}$ | 44.73 | 41.87 | 43.36 | 53.50 | 48.18 |
| $Zr^{4+}$ | 9.09 | 14.89 | 8.00 | 8.33 | 8.89 |
| $Si^{4+}$ | 13.64 | 12.77 | 12.00 | 12.50 | 13.33 |
| $Nb^{5+}$ | | | | | |
| $Ta^{5+}$ | 4.55 | 4.26 | 12.00 | | |
| $Al^{3+}$ | | | | | |
| $Y^{3+}$ | | | | | |
| $Gd^{3+}$ | | | | | |
| $Ga^{3+}$ | | | | | |
| $B^{3+}$ | | | | | 2.22 |
| $Ba^{2+}$ | 24.55 | | | | |
| $Zn^{2+}$ | | | | | |
| $Sb^{3+}$ | | | | | |
| Total | 100.00 | 100.00 | 100.00 | 100.00 | 100.00 |
| $Ti^{4+}+Zr^{4+}+Si^{4+}$ | 67.45 | 69.53 | 63.36 | 74.33 | 70.40 |
| $La^{3+}+Y^{3+}+Gd^{3+}+Ba^{2+}$ | 28.00 | 26.21 | 24.64 | 25.67 | 27.38 |

(continued)

| Cation % | EXAMPLE 16 | EXAMPLE 17 | EXAMPLE 18 | EXAMPLE 19 | EXAMPLE 20 |
|---|---|---|---|---|---|
| $(La^{3+}+Y^{3+}+Gd^{3+}+Ba^{2+})/(Ti^{4+}+Zr^{4+}+Si^{4+})$ | 0.42 | 0.38 | 0.39 | 0.35 | 0.39 |
| $Si^{4+}/(Ti^{4+}+Zr^{4+})$ | 0.25 | 0.22 | 0.23 | 0.20 | 0.23 |
| $La^{3+}/(Ti^{4+}+Zr^{4+})$ | 0.06 | 0.46 | 0.48 | 0.42 | 0.48 |
| Diameter (D)/mm | 10.42 | 7.44 | 10.78 | 10.58 | 10.97 |
| Thickness (T)/mm | 5.42 | 4.67 | 5.07 | 5.40 | 5.58 |
| $T_g/°C$ | 768 | 831 | 792 | 808 | 801 |
| $T_x/°C$ | 860 | 904 | 933 | 932 | 988 |
| $T_x-T_g/°C$ | 92 | 73 | 141 | 124 | 187 |
| Specific gravity ($S_g$) | 4.791 | 5.155 | 5.373 | 4.809 | 4.851 |
| nd | 2.06208 | 2.16671 | 2.17978 | 2.20123 | 2.17642 |
| $n_F$ | 2.09792 | 2.20555 | 2.22106 | 2.24587 | 2.21788 |
| $n_C$ | 2.04785 | 2 . 15133 | 2.16348 | 2.18375 | 2.16009 |
| $n_g$ | 2.12945 | 2.23952 | 2.25745 | 2.28556 | 2.25450 |
| $\nu_d$ | 21.21 | 21.52 | 20.49 | 19.34 | 20.36 |
| $P_{g,F}$ | 0.6295 | 0.6266 | 0.6322 | 0.6390 | 0.6336 |
| $\Delta P_{g,F}$ | 0.0208 | 0.0184 | 0.0222 | 0.0271 | 0.0234 |

[Table 5]

| Cation % | EXAMPLE 21 | EXAMPLE 22 | EXAMPLE 23 | EXAMPLE 24 | EXAMPLE 25 |
|---|---|---|---|---|---|
| $La^{3+}$ | 28.00 | 28.00 | 28.00 | 28.00 | 28.00 |
| $Ti^{4+}$ | 32.91 | 27.45 | 52.91 | 58.36 | 60.61 |
| $Zr^{4+}$ | 9.09 | 9.09 | 9.09 | 9.09 | 9.09 |
| $Si^{4+}$ | 13.64 | 13.64 | 10.00 | 4.55 | 2.30 |
| $Nb^{5+}$ | 16.36 | 21.82 | | | |
| $Ta^{5+}$ | | | | | |
| $Al^{3+}$ | | | | | |
| $Y^{3+}$ | | | | | |
| $Gd^{3+}$ | | | | | |
| $Ga^{3+}$ | | | | | |
| $B^{3+}$ | | | | | |
| $Ba^{2+}$ | | | | | |
| $Zn^{2+}$ | | | | | |
| $Sb^{3+}$ | | | | | |
| Total | 100.00 | 100.00 | 100.00 | 100.00 | 100.00 |

(continued)

| Cation % | EXAMPLE 21 | EXAMPLE 22 | EXAMPLE 23 | EXAMPLE 24 | EXAMPLE 25 |
|---|---|---|---|---|---|
| $Ti^{4+}+Zr^{4+}+Si^{4+}$ | 55.64 | 50.18 | 72.00 | 72.00 | 72.00 |
| $La^{3+}+Y^{3+}+Gd^{3+}+Ba^{2+}$ | 28.00 | 28.00 | 28.00 | 28.00 | 28.00 |
| $(La^{3+}+Y^{3+}+Gd^{3+}+Ba^{2+}) / (Ti^{4+}+Zr^{4+}+Si^{4+})$ | 0.50 | 0.56 | 0.39 | 0.39 | 0.39 |
| $Si^{4+}/(Ti^{4+}+Zr^{4+})$ | 0.32 | 0.37 | 0.16 | 0.07 | 0.03 |
| $La^{3+}/(Ti^{4+}+Zr^{4+})$ | 0.67 | 0.77 | 0.45 | 0.42 | 0.40 |
| Diameter (D)/mm | 10.27 | 10.22 | 10.72 | 10.60 | 10.43 |
| Thickness (T)/mm | 5.29 | 5.09 | 5.62 | 5.64 | 5.69 |
| $T_g$/°C | 779 | 770 | 801 | 804 | 804 |
| $T_x$/°C | 959 | 932 | 975 | 949 | 933 |
| $T_x-T_g$/°C | 180 | 162 | 174 | 145 | 129 |
| Specific gravity ($S_g$) | 5.020 | 5.074 | 4.930 | 4.996 | 5.023 |
| nd | 2.16815 | 2.16199 | 2.21073 | 2.26717 | 2.28915 |
| $n_F$ | 2.20746 | 2.20047 | 2.25495 | 2.31626 | 2.34014 |
| $n_C$ | 2.15258 | 2.14671 | 2.19335 | 2.24798 | 2.26925 |
| $n_g$ | 2.24187 | 2.23408 | 2.29421 | 2.36010 | 2.38580 |
| $\nu_d$ | 21.28 | 21.61 | 19.65 | 18.56 | 18.18 |
| $P_{g,F}$ | 0.6270 | 0.6251 | 0.6372 | 0.6421 | 0.6440 |
| $\Delta P_{g,F}$ | 0.0184 | 0.0171 | 0.0259 | 0.0289 | 0.0302 |

[Table 6]

| Cation % | EXAMPLE 26 | COMPARATIVE EXAMPLE 1 | COMPARATIVE EXAMPLE 2 | COMPARATIVE EXAMPLE 3 |
|---|---|---|---|---|
| $La^{3+}$ | 28.00 | 30.00 | 30.00 | 5.38 |
| $Ti^{4+}$ | 62.91 | | 10.00 | |
| $Zr^{4+}$ | 9.09 | 10.00 | | 2.15 |
| $Si^{4+}$ | | | | 17.78 |
| $Nb^{5+}$ | | 60.00 | | |
| $Ta^{5+}$ | | | | 1.74 |
| $Al^{3+}$ | | | | 12.65 |
| $Y^{3+}$ | | | | 4.08 |
| $Gd^{3+}$ | | | | |
| $Ga^{3+}$ | | | 60.00 | |
| $B3^{+}$ | | | | 28.68 |
| $Ba^{2+}$ | | | | 0.78 |
| $Zn^{2+}$ | | | | 26.62 |

(continued)

| Cation % | EXAMPLE 26 | COMPARATIVE EXAMPLE 1 | COMPARATIVE EXAMPLE 2 | COMPARATIVE EXAMPLE 3 |
|---|---|---|---|---|
| $Sb^{3+}$ | | | | 0.15 |
| Total | 100.00 | 100.00 | 100.00 | 100.00 |
| $Ti^{4+}+Zr^{4+}+Si^{4+}$ | 72.00 | 10.00 | 10.00 | 19.93 |
| $La^{3+}+Y^{3+}+Gd^{3+}+Ba^{2+}$ | 28.00 | 30.00 | 30.00 | 10.24 |
| $(La^{3+}+Y^{3+}+Gd^{3+}+Ba^{2+})/(Ti^{4+}+Zr^{4+}+Si^{4+})$ | 0.39 | 3.00 | 3.00 | 0.51 |
| $Si^{4+}/(Ti^{4+}+Zr^{4+})$ | | | | 8.29 |
| $La^{3+}/(Ti^{4+}+Zr^{4+})$ | 0.39 | 3.00 | 3.00 | 2.51 |
| Diameter (D)/mm | 10.23 | 2.98 | 2.57 | - |
| Thickness (T)/mm | 5.63 | 2.98 | 2.57 | - |
| $T_g/°C$ | 810 | 736 | 755 | 620 |
| $T_x/°C$ | 922 | 830 | 827 | Not Detected |
| $T_x-T_g/°C$ | 112 | 94 | 72 | - |
| Specific gravity ($S_g$) | 5.060 | 5.650 | 5.731 | 3.950 |
| nd | 2.30909 | 2.24127 | 1.98842 | 1.67267 |
| nF | 2.36173 | 2.28232 | 2.01144 | 1.68226 |
| nc | 2.28857 | 2.22449 | 1.97887 | 1.66856 |
| $n_g$ | 2.40893 | - | - | 1.68985 |
| $\nu_d$ | 17.89 | 21.46 | 30.34 | 49.10 |
| $P_{g,F}$ | 0.6452 | - | - | 0.5540 |
| $\Delta P_{g,F}$ | 0.0309 | - | - | -0.0080 |

In Comparative Examples 1 and 2, glass having a larger specific gravity than the glass of the present embodiment was obtained. In Comparative Example 3, a glass having a lower refractive index than the glass of the present embodiment was obtained.

From the above, it was confirmed that the optical glass of each example has a high refractive index, low dispersibility, low specific gravity, and devitrification resistance stability at a high level.

[Sign Explanation]

1...Imaging Device, 101...Camera body, 102...Lens barrel, 103...Lens, 104...Sensor chip, 105...Glass substrate, 106...Multi-chip module, CAM...Imaging device (Camera with non-interchangeable lens), WL...Photographing lens, M...Liquid crystal monitor, EF...Auxiliary light emitting unit, B1...Release button, B2... Function button, 2...Multi-photon microscope, 201...Pulse laser device, 202...Pulse division device, 203...Beam adjustment unit, 204,205,212...Dichroic mirror, 206...Objective lens, 207,211,213...Fluorescence detection unit, 208...Condensing lens, 209...Pinhole, 210...Image forming lens, S...Sample, 3...Joining lens, 301...first lens element, 302...Second lens element, 303...joint member, 4...Gas jet floating furnace, 401...Stage, 402...Pedestal, 403...Laser light source, 404, 405 ...Mirror, 406...Radiation thermometer, 407...Computer, 408...CCD camera, 409...Monitor, 410...Gas flow rate regulator, L...Laser light, M...Raw material

**Claims**

1.  An optical glass comprising:

    by cation %,
    more than 0% and up to 40% of a content rate of $La^{3+}$;
    15% to 65% of a content rate of $Ti^{4+}$; and
    more than 0% and up to 20% of a content rate of $Zr^{4+}$; wherein
    a refractive index ($n_d$) with respect to a d-line is from 2.00 to 2.35.

2.  An optical glass comprising:

    by cation %,
    more than 0% and up to 40% of a content rate of $La^{3+}$;
    15% to 65% of a content rate of $Ti^{4+}$;
    more than 0% and up to 20% of a content rate of $Zr^{4+}$,
    0% to 20% of a content rate of $Si^{4+}$, and
    40% to 80% of a total content rate of $Ti^{4+}$, $Zr^{4+}$ and $Si^{4+}$ ($Ti^{4+} + Zr^{4+} + Si^{4+}$).

3.  An optical glass according to claims 1 or 2, wherein, by cation %,
    a content rate of $B^{3+}$ is from 0% to 18%

4.  An optical glass comprising:

    by cation %,
    more than 0% and up to 40% of a content rate of $La^{3+}$;
    15% to 65% of a content rate of $Ti^{4+}$;
    more than 0% and up to 20% of a content rate of $Zr^{4+}$; and
    0% to 20% of a content rate of $Si^{4+}$, wherein
    $B^{3+}$ is not substantially contained.

5.  An optical glass comprising:

    by cation %,
    more than 0% and up to 40% of a content rate of $La^{3+}$;
    15% to 65% of a content rate of $Ti^{4+}$; and
    more than 0% and up to 20% of a content rate of $Zr^{4+}$, wherein
    the optical glass further comprising at least one cation in the group consisting of $Si^{4+}$ and $Al^{3+}$.

6.  The optical glass according to claims 1 or 3, wherein, by cation %,
    a content rate of $Si^{4+}$ is from 0% to 20%.

7.  The optical glass according to any one of claims 1-5, wherein, by cation %,
    a content rate of $Al^{3+}$ is from 0% to 5%.

8.  The optical glass according to any one of claims 1, 3-7, wherein, by cation %,
    a total content rate of $Ti^{4+}$, $Zr^{4+}$ and $Si^{4+}$ ($Ti^{4+} + Zr^{4+} + Si^{4+}$) is from 40% to 80%.

9.  The optical glass according to any one of claims 1-8, wherein, by cation %,
    a ratio of the content rate of $La^{3+}$ to a total content rate of $Ti^{4+}$ and $Zr^{4+}$ ($La^{3+}/ (Ti^{4+} + Zr^{4+})$) is from 0.05 to 0.95.

10. The optical glass according to any one of claims 1-9, wherein, by cation %,

    a content rate of $Y^{3+}$ is from 0% to 10%; and
    a content rate of $Ba^{2+}$ is from 0% to 30%.

11. The optical glass according to any one of claims 1-10, wherein, by cation %,
    a ratio of the content rate of a total content rate of $La^{3+}$, $Y^{3+}$, $Gd^{3+}$ and $Ba^{2+}$ to a total content rate of $Ti^{4+}$, $Zr^{4+}$, and

Si$^{4+}$ ((La$^{3+}$ + Y$^{3+}$ + Gd$^{3+}$ + Ba$^{2+}$) / (Ti$^{4+}$ + Zr$^{4+}$ + Si$^{4+}$)) is from 0.30 to 0.65.

12. The optical glass according to any one of claims 1-11, wherein, by cation %,
a ratio of a total content rate of La$^{3+}$, Y$^{3+}$, Gd$^{3+}$ and Ba$^{2+}$ (La$^{3+}$ + Y$^{3+}$ + Gd$^{3+}$ + Ba$^{2+}$) is from 20 to 40%.

13. The optical glass according to any one of claims 1-12 wherein, by cation %,
a ratio of the content rate of a total content rate of La$^{3+}$, Y$^{3+}$, Gd$^{3+}$ and Ba$^{2+}$ to a total content rate of Ti$^{4+}$, Zr$^{4+}$, and Si$^{4+}$ ((La$^{3+}$ + Y$^{3+}$ + Gd$^{3+}$ + Ba$^{2+}$) / (Ti$^{4+}$ + Zr$^{4+}$ + Si$^{4+}$)) is from 0.30 to 0.65.

14. The optical glass according to any one of claims 1-13, wherein, by cation %,
a ratio of the content rate of Si$^{4+}$ to a total content rate of Ti$^{4+}$ and Zr$^{4+}$ (Si$^{4+}$/ (Ti$^{4+}$ + Zr$^{4+}$)) is from 0 to 0.50.

15. The optical glass according to any one of claims 1-14, wherein, by cation %,
a content rate of Ta$^{5+}$ is from 0% to 20%.

16. The optical glass according to any one of claims 1-15, wherein, by cation %,

a content rate of Nb$^{5+}$ is from 0% to 30%;
a content rate of Ga$^{3+}$ is from 0% to 20%;
a content rate of Gd$^{3+}$ is from 0% to 25%; and
a content rate of Y$^{3+}$ is from 0% to 10%.

17. The optical glass according to any one of claims 1-16, wherein, by cation %,
a content rate of Ba$^{2+}$ is from 0% to 30%.

18. An optical glass manufactured by floating melting method, wherein,

La$^{3+}$, Ti$^{4+}$, and Zr$^{4}$ are contained as essential cationic components, and
at least one cation in a group consisting of Si$^{4+}$, Nb$^{5+}$, Ta$^{5+}$ and Al$^{3+}$ is/are contained.

19. The optical glass according to claim 18, wherein, by cation %,

a content rate of La$^{3+}$ is more than 0% and up to 40%;
a content rate of Ti$^{4+}$ is from 15% to 65%; and
a content rate of Zr$^{4+}$ is more than 0% and up to 20%.

20. The optical glass according to claim 18 or 19, wherein, by cation %,

a content rate of Si$^{4+}$ is from 0% to 20%; and
a total content rate of Ti$^{4+}$, Zr$^{4+}$ and Si$^{4+}$ (Ti$^{4+}$ + Zr$^{4+}$+ Si$^{4+}$) is from 40% to 80%.

21. The optical glass according to any one of claims 1-20, wherein
a refractive index (n$_d$) with respect to a d-line is from 2.00 to 2.35.

22. The optical glass according to any one of claims 1-21, wherein
an abbe number (ν$_d$) is from 15 to 25.

23. The optical glass according to any one of claims 1-22, wherein
a specific gravity (Sg) is equal to or less than 5.4.

24. The optical glass according to any one of claims 1-23, wherein
a partial dispersion ratio is satisfying the following equation (1)

$$-0.00607 \times \nu_d + 0.752 < P_{g, F} < -0.00607 \times \nu_d + 0.762$$

... (1)

25. The optical glass according to any one of claims 1-24, wherein

a temperature difference ($\Delta T = T_x - T_g$) described by crystallization start temperature ($T_x$) - glass transition temperature ($T_g$) of the optical glass is from 70 degrees Celsius to 200 degrees Celsius.

26. The optical glass according to any one of claims 1-25, wherein
    a diameter (D) is equal to or more than 6 mm.

27. The optical glass according to any one of claims 1-26, wherein
    a thickness (T) is equal to or more than 4 mm.

28. An optical element using the optical glass according to any one of claims 1-27.

29. An optical system including the optical element according to claim 28.

30. A microscope objective lens comprising the optical system according to claim 29.

31. An interchangeable camera lens comprising the optical system according to claim 29.

32. An optical device comprising the optical system according to claim 29.

33. A cemented lens comprising:

    a first lens element; and
    a second lens element, wherein
    at least one of the first lens element and the second lens element comprises the optical glass according to any one of claims 1-27.

34. An optical system comprising the cemented lens according to claim 33.

35. A microscope objective lens comprising the optical system according to claim 34.

36. An interchangeable camera lens comprising the optical system according to claim 34.

37. An optical device comprising the optical system according to claim 34.

EP 4 365 144 A1

*Fig. 1*

*Fig. 2*

EP 4 365 144 A1

*Fig. 3*

EP 4 365 144 A1

*Fig. 4*

EP 4 365 144 A1

*Fig. 5*

3

303

302

301

EP 4 365 144 A1

Fig.6

*Fig.7*

*Fig. 8*

Fig. 9

EP 4 365 144 A1

## INTERNATIONAL SEARCH REPORT

International application No.

**PCT/JP2022/025717**

### A. CLASSIFICATION OF SUBJECT MATTER

*C03C 3/068*(2006.01)i; *C03C 3/062*(2006.01)i; *C03C 3/12*(2006.01)i; *C03C 3/155*(2006.01)i; *G02B 1/00*(2006.01)i
FI:   C03C3/068; C03C3/062; C03C3/12; C03C3/155; G02B1/00

According to International Patent Classification (IPC) or to both national classification and IPC

### B. FIELDS SEARCHED

Minimum documentation searched (classification system followed by classification symbols)

C03C1/00-14/00; G02B1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
|---|---|---|
| X | JP 2015-040171 A (HOYA CORP) 02 March 2015 (2015-03-02) | 1-3, 5-37 |
| | paragraphs [0001]-[0002], [0090], [0107], table 2, example 16 | |
| Y | | 18-20 |
| A | | 4 |
| X | WO 2013/129302 A1 (HOYA CORP) 06 September 2013 (2013-09-06) | 1-3, 5-37 |
| | paragraphs [0002]-[0003], [0091], [0109], table 1, example 1 | |
| Y | | 18-20 |
| A | | 4 |
| X | JP 2010-030879 A (HOYA CORP) 12 February 2010 (2010-02-12) | 1, 5-7, 10, 12, 15-19, 21, 23, 25-37 |
| | paragraphs [0001]-[0002], [0060], [0097], table 1, examples 28-31, 33-36 | |
| Y | | 18-20 |
| X | JP 2020-059629 A (HOYA CORP) 16 April 2020 (2020-04-16) | 1, 5-7, 9-10, 12, 14-17, 21, 23, 25-37 |
| | paragraphs [0001]-[0004], table 2-1, example 1, table 2-3, example 10 | |
| Y | | 18-20 |

☑ Further documents are listed in the continuation of Box C.   ☑ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/025717** |

### C.    DOCUMENTS CONSIDERED TO BE RELEVANT

| Category* | Citation of document, with indication, where appropriate, of the relevant passages | Relevant to claim No. |
|---|---|---|
| X | JP 2017-132656 A (NIPPON ELECTRIC GLASS CO) 03 August 2017 (2017-08-03) claim 4, paragraphs [0001]-[0002], [0022]-[0023], [0027]-[0028], table 3, example 15 | 1-37 |
| X | JP 2016-199408 A (NIPPON ELECTRIC GLASS CO) 01 December 2016 (2016-12-01) claim 6, paragraphs [0001]-[0002], [0022]-[0031], table 3, examples 12, 13 | 1-37 |
| X | WO 2010/071202 A1 (NIPPON ELECTRIC GLASS CO) 24 June 2010 (2010-06-24) paragraph [0007], table 1, example 1 | 1-17, 21-37 |
| A | WO 2019/058617 A1 (NIKON CORPORATION) 28 March 2019 (2019-03-28) entire text, all drawings | 1-37 |

Form PCT/ISA/210 (second sheet) (January 2015)

**INTERNATIONAL SEARCH REPORT**
Information on patent family members

International application No.

**PCT/JP2022/025717**

| Patent document cited in search report | | | Publication date (day/month/year) | Patent family member(s) | | | Publication date (day/month/year) |
|---|---|---|---|---|---|---|---|
| JP | 2015-040171 | A | 02 March 2015 | US paragraphs [0002]-[0003], [0191], [0254]-[0255], table 2, example 16 | 2016/0194237 | A1 | |
| | | | | WO | 2015/025943 | A1 | |
| | | | | CN | 105452181 | A | |
| | | | | KR | 10-2016-0031017 | A | |
| WO | 2013/129302 | A1 | 06 September 2013 | US paragraphs [0002]-[0003], [0154], [0208], table 1, example 1 | 2015/0045204 | A1 | |
| | | | | CN | 104136388 | A | |
| | | | | KR | 10-2014-0129025 | A | |
| JP | 2010-030879 | A | 12 February 2010 | US paragraphs [0001]-[0002], [0121], [0164], table 1, examples 28-31, 33-36 | 2009/0325779 | A1 | |
| | | | | CN | 101613184 | A | |
| | | | | KR | 10-2010-0002209 | A | |
| JP | 2020-059629 | A | 16 April 2020 | CN | 111039562 | A | |
| | | | | TW | 202028141 | A | |
| JP | 2017-132656 | A | 03 August 2017 | (Family: none) | | | |
| JP | 2016-199408 | A | 01 December 2016 | (Family: none) | | | |
| WO | 2010/071202 | A1 | 24 June 2010 | (Family: none) | | | |
| WO | 2019/058617 | A1 | 28 March 2019 | EP entire text, all drawings | 3686169 | A1 | |
| | | | | US | 2020/0223739 | A1 | |
| | | | | CN | 111108074 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021107778 A
- JP 7081973 A